# EUROPÄISCHE PATENTSCHRIFT

(11) **EP 2 858 802 B1**
(45) Veröffentlichungstag und Bekanntmachung des Hinweises auf die Patenterteilung: **22.08.2018**
(21) Anmeldenummer: 13734325.7
(22) Anmeldetag: 11.06.2013
(51) Int. Cl.: F26B 17/00, F26B 17/02, F26B 3/02, B29B 9/16, B29B 9/06

(54) **VERFAHREN UND VORRICHTUNG ZUM TROCKNEN UND KRISTALLISIEREN VON POLYMEREM GRANULAT**
METHOD AND DEVICE FOR DRYING AND CRYSTALLIZING OF POLYMERIC GRANULATE
PROCÉDÉ ET DISPOSITIF DE SÉCHAGE ET DE CRISTALLISATION DE GRANULÉS POLYMÈRES

(30) Priorität: 12.06.2012 DE 102012011641
(43) Veröffentlichungstag der Anmeldung: 15.04.2015
(73) Patentinhaber: Maag Automatik GmbH, 63762 Großostheim (DE)
(72) Erfinder: Deiß, Stefan, 55296 Harxheim (DE)
(74) Vertreter: Spranger, Stephan
(86) Internationale Anmeldenummer: PCT/EP2013/001714
(87) Internationale Veröffentlichungsnummer: WO 2013/185912

(56) Entgegenhaltungen:
- EP-A1- 2 433 771
- EP-A2- 0 379 684
- EP-A2- 0 451 546
- DE-A1- 19 902 458
- FR-A- 1 352 614
- US-A- 6 099 778
- US-A1- 2009 218 052

## Beschreibung

Die vorliegende Erfindung betrifft ein Verfahren und eine Vorrichtung zum Trocknen und Kristallisieren von mit Wasser umspültem Granulat.

Aus der Druckschrift EP 0 379 684 A2 ist ein Verfahren und eine Vorrichtung zum kontinuierlichen Kristallisieren von Polyestergranulat bekannt, wobei das Polyestergranulat durch zwei hintereinandergeschaltete Wirbelbetten geführt wird. Das erste Wirbelbett ist ein Sprudelbett und das zweite Wirbelbett ist ein Fließbett. Ein eintretender, amorpher Granulatstrom wird im Sprudelbett unter intensiver Bewegung und Mischung mit bereits vorhandenem kristallinem Material aufgeheizt und vorkristallisiert. Als Fluidisierungsgas wird erhitzte Luft oder ein Inertgas wie Stickstoff eingesetzt. Das Abgas des Sprudelbetts entweicht oben und kann im Rundlauf zum Sprudelbett zurückgeführt werden. Der aus dem Sprudelbett austretende Granulatstrom gelangt in das Fließbett, welches einen kanalförmigen Behälter aufweist, der unten mit einem Lochboden versehen ist. Das Abgas des Fließbetts kann ebenfalls in einem Kreislauf wieder zum Fließbett zurückgeführt werden.

Dieses Verfahren weist den Nachteil auf, dass sowohl für das Wirbelbett als auch das Sprudelbett jeweils eigene, getrennte Kreisläufe für die Rückführung und Aufbereitung des Behandlungsgases vorgesehen werden müssen. Dies führt zu erhöhtem Installationsaufwand und zu erhöhten Anlagen- und Betriebskosten.

Aus der Druckschrift WO 2009/027064 A2 ist ein Verfahren und eine Anlage zur Herstellung von hydrolysearmen Polyestergranulaten bekannt, worin ein durch Unterwassergranulierung erzeugtes Gemisch aus Pellets und Wasser einer Rührzentrifuge als Vortrockner zugeführt werden. Aus dem Vortrockner werden die Pellets über ein Klassiersieb in ein Sammelgefäß befördert, um anschließend in ein Verweilsilo befördert zu werden. Das Verweilsilo wird mit kalter Luft durchströmt, die etwa bei Raumtemperatur zugeführt wird. Die Abluft des Silos kann zur Spülung des Sammelbehälters und des Vortrockners verwendet werden. Hierzu wird mit einem Heizer die aus dem Verweilsilo austretende Luft auf 140 °C bis 180 °C aufgeheizt. Dem Vortrockner ist ein Einspritzkondensator nachgeschaltet, um der Abluft des Vortrockners den Wasserdampf zu entziehen und Prozesswasser zurückzugewinnen.

In dieser Anlage muss das Verweilsilo notwendig vorhanden und in die Anlage einbezogen sein, um die Abluft des Verweilsilos zur Spülung des Vortrockners und des Sammelbehälters nutzen zu können. Das Verfahren ist daher nicht geeignet für Anwendungen, in denen kein Verweilsilo verwendet wird, oder für Anwendungen, an denen ein Verweilsilo an einem anderen, entfernten Ort entkoppelt von der Trocknung des Granulats betrieben wird. Darüber hinaus wird die Abluft des Vortrockners, bzw. des Einspritzkondensators nicht weiter verwendet und die darin enthaltene Wärmeenergie bleibt daher ungenutzt. Die Druckschrift EP 2 433 771 A1 beschreibt ein Verfahren zur Erhöhung des Molekulargewichts unter Nutzung der Restwärme von Polyestergranulat, sowie eine entsprechende Vorrichtung. Dabei kann dort entweder konditionierte Luft dem Trockner dort zugeführt werden und aus dem Vortrockner abgeführt werden, oder es kann Inertgas in einem geschlossenen Inertgas-Kreislauf zur Kristallisation eingesetzt werden.

Es ist daher Aufgabe der vorliegenden Erfindung, die oben genannten Nachteile zu überwinden und ein Verfahren und eine Vorrichtung zum Trocknen und Kristallisieren von mit Wasser umspültem Granulat anzugeben, die einen geringen Installationsaufwand, sowie geringere Installations- und Betriebskosten aufweisen.

Es ist eine weitere Aufgabe der vorliegenden Erfindung, ein Verfahren und eine Vorrichtung zum Trocknen und Kristallisieren von mit Wasser umspültem Granulat anzugeben, die vielseitig verwendbar sind.

Diese Aufgaben der vorliegenden Erfindung werden mit einem Verfahren mit den Merkmalen des Anspruchs 1 sowie einer Vorrichtung mit den Merkmalen des Anspruchs 9 gelöst.

Bevorzugte Ausführungsformen sind in den abhängigen Ansprüchen dargelegt.

In einem ersten Aspekt betrifft die vorliegende Erfindung ein Verfahren zum kontinuierlichen Trocknen und Kristallisieren von mit Wasser umspültem Granulat, aufweisend die Schritte: Zuführen von mit Wasser umspültem Granulat in einen Vortrockner, Vortrocknen des Granulats im Vortrockner, Befördern von vorgetrocknetem Granulat in einen Trockner/Kristallisator, und Abgeben von kristallisiertem Granulat aus dem Trockner/Kristallisator; wobei Luftkonditionierungsmittel temperierte und im Feuchtegrad konditionierte, z.B. heiße, trockene oder z.B. auch gekühlte und/oder zur erhöhten Erzeugung von Nukleierungskeimen leicht angefeuchtete Luft erzeugen, die dem Trockner/Kristallisator zugeführt wird, wobei die Abluft des Trockners/Kristallisators dem Vortrockner zugeführt wird, und wobei die Abluft des Vortrockners zu den Luftkonditionierungsmitteln zurückgeführt wird, so dass ein geschlossener Luftkreislauf durch den Trockner/Kristallisator, Vortrockner und die Luftkonditionierungsmittel gebildet wird.

Auf diese Weise wird die Luft in einem geschlossenen Kreislauf geführt, ausgehend von den Luftkonditionierungsmitteln durch den Trockner/Kristallisator, den Vortrockner und zurück zu den Luftkonditionierungsmitteln, in denen die Luft für ein erneutes Einblasen in den Trockner/Kristallisator wiederaufbereitet wird. Es ist daher nur ein Satz von Luftkonditionierungsmitteln notwendig, um die Spülluft für den Vortrockner und den Trockner/Kristallisator zu erzeugen. Das Verfahren kann daher mit einer Anlage oder Vorrichtung umgesetzt werden, die einen geringeren Installationsaufwand erfordert. Der Luftkreislauf ist nicht an vorgelagerte oder nachgelagerte Prozesse gekoppelt, so dass sich das Verfahren auf einfache Weise in eine Vielzahl größerer Gesamtprozesse integrieren lässt.

Die Rückführung der Vortrocknerabluft bietet darüber hinaus den Vorteil, dass die in der Abluft des Vortrockners enthaltene Wärmeenergie wiederverwertet und dadurch Energie gespart werden kann. Zur Regeneration und erneuten Erzeugung von temperierter und im Feuchtegrad konditionierter, z.B. heißer, trockener Luft für den Trockner/Kristallisator wird daher ein entsprechend geringerer Betrag an zusätzlich einzubringender Heizenergie benötigt. Auf diese Weise können die Kosten für den Betrieb des Verfahrens gesenkt werden.

Bevorzugt findet die Vortrocknung in einem Zentrifugaltrockner als Vortrockner statt.

Mit den Luftkonditionierungsmitteln wird die zurückgeführte Abluft des Vortrockners entfeuchtet und erhitzt, um die trockene, heiße Luft für das Trocknen/Kristallisieren im Trockner/Kristallisator zu erzeugen.

In dem Trockner/Kristallisator kann das zu kristallisierende Granulat auf einem Bandförderer, über eine Rutsche, über ein Fluidbett, über eine Rüttelrinne oder einen Behälter mit Rührwerk transportiert werden.

Das Granulat wird erfindungsgemäß im Trockner/Kristallisator mit einem Klassiersieb gesiebt. Die dem Trockner/Kristallisator zugeführte Luft kann eine Temperatur im Bereich von 140 °C bis 200 °C, bevorzugt im Bereich 160 °C bis 180 °C, besonders bevorzugt von etwa 170 °C aufweisen. In dem Vortrockner kann das Granulat auf eine Temperatur von 130 °C oder höher vorgetrocknet werden.

In dem Trockner/Kristallisator kann das Granulat auf eine Temperatur im Bereich von 160 °C bis 180 °C, bevorzugt auf eine Temperatur von 170 °C erwärmt werden.

Bevorzugt werden die Luftkonditionierungsmittel so gesteuert, dass die dem Vortrockner zugeführte Luft auf einen vorgegebenen Taupunkt geregelt wird.

In einem zweiten Aspekt betrifft die vorliegende Erfindung eine Vorrichtung zum kontinuierlichen Trocknen und Kristallisieren von mit Wasser umspültem Granulat, aufweisend einen Vortrockner, welcher einen Einlass zur Zuführung von mit Wasser umspülten Granulat und einen Auslass zur Abgabe von vorgetrocknetem Granulat aufweist, einen Trockner/Kristallisator, der einen Einlass zur Zuführung des vorgetrockneten Granulats und einen Auslass zur Abgabe von getrocknetem und kristallisiertem Granulat aufweist, und Luftkonditionierungsmittel, um temperierte (erhitzte oder gekühlte) und im Feuchtegrad konditionierte (entfeuchtete oder angefeuchtete), z.B.trockene, heiße, Luft zu erzeugen, welche dem Trockner/Kristallisator zugeführt werden kann, wobei die Vorrichtung eingerichtet ist, eine Abluft des Trockners/Kristallisators dem Vortrockner zuzuführen, und weiter eingerichtet ist, eine Abluft des Vortrockners zurückzuführen zu den Luftkonditionierungsmitteln, um einen geschlossenen Luftkreislauf zu bilden.

Der Vortrockner ist bevorzugt ein Zentrifugaltrockner.

Bevorzugt weisen die Luftkonditionierungsmittel einen Tropfenabscheider und/oder ein Molekularsieb mit Zeolithmaterial zum Entfeuchten der von dem Vortrockner zurückgeführten Abluft; Heizmittel zum Erhitzen der Luft; und ein Gebläse zum Erzeugen eines Luftstroms auf. Somit kann beispielsweise bevorzugt auch Luft mit geringem Taupunkt von z.B. -40°C erzeugbar sein, welche dann ihrerseits wieder zusätzlich vermehrt Feuchtigkeit aus dem Prozesse aufnehmen kann.

Der Trockner/Kristallisator kann einen Bandförderer, eine Rutsche, ein Fluidbett, eine Rüttelrinne und/oder einen Behälter mir Rührwerk aufweisen, um das Granulat zu transportieren. Es ist erfindungsgemäß ein Klassiersieb im Trockner/Kristallisator angeordnet vorgesehen, um das Granulat zu sieben.

Die Vorrichtung kann eine Steuereinheit zum Steuern der Luftkonditionierungsmittel aufweisen, um eine Temperatur, eine Luftmenge und/oder eine Luftfeuchte der dem Trockner/Kristallisator zuzuführenden Luft zu steuern. Insbesondere kann die Steuereinheit dazu eingerichtet sein, die dem Vortrockner zugeführte Luft auf einen vorgebbaren Taupunkt zu steuern oder zu regeln.

Die Erfindung wird nachfolgend mit Bezug auf die Figuren beschrieben:
- Fig. 1: zeigt eine schematische Darstellung einer Vorrichtung zum Trocknen und Kristallisieren von Granulat als Funktionsschema; und
- Fig. 2: zeigt einer Vorrichtung zum Trocknen und Kristallisieren von Granulat gemäß einer Ausführungsform einer Anlage der Erfindung.

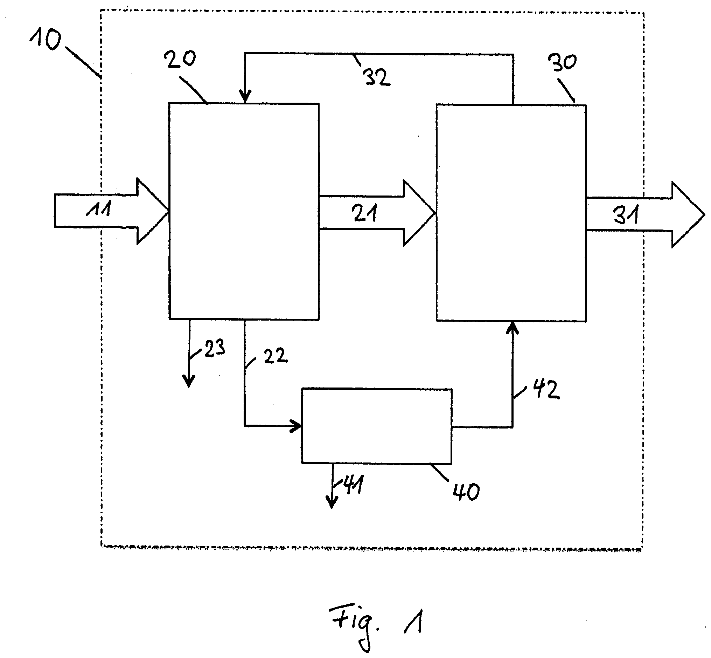

Die Fig. 1 zeigt ein Funktionsschema einer Ausführungsform einer Vorrichtung 10 zum kontinuierlichen Trocknen und Kristallisieren von mit Wasser umspültem Granulat, mit einem Trockner 20, einem Trockner/Kristallisator 30 und Luftkonditionierungsmitteln 40. Der Trockner 20 ist bevorzugt ein Zentrifugaltrockner 20.

Wie in der Fig. 1 gezeigt, wird mit Wasser umspültes Granulat 11 dem Zentrifugaltrockner 20 zugeführt. In dem Zentrifugaltrockner wird das Wasser abgetrennt und kann als Abwasser 23 abgelassen werden. Das Granulat wird in dem Zentrifugaltrockner 20 einer Vortrocknung unterworfen und als vorgetrocknetes Granulat 21 aus dem Zentrifugaltrockner 20 abgegeben, um einem Trockner/Kristallisator 30 zugeführt zu werden.

In dem Trockner/Kristallisator 30 wird das Granulat endgetrocknet und auf den gewünschten teilkristallinen Endwert kristallisiert, um als kristallisiertes Granulat 31 aus dem Trockner/Kristallisator 30 abgegeben zu werden.

Die Luftkonditionierungsmittel 40 erzeugen einen Luftstrom temperierter und im Feuchtegrad konditionierter, z.B.heißer, trockener, Luft 42, der dem Trockner/Kristallisator 30 zugeführt wird. Die heiße, trockene Luft 42 dient als Spülluft für den Trockner/Kristallisator 30, um das Granulat zu trocknen und zu kristallisieren.

Die Abluft 32 des Trockners/Kristallisators 30 wird dem Zentrifugaltrockner 20 zugeführt, um den Zentrifugaltrockner 20 zu spülen zur Vortrocknung des Granulats.

Von dem Zentrifugaltrockner abgegebene Abluft 22 wird zurückgeführt zu den Luftkonditionierungsmitteln 40. Die Luftkonditionierungsmittel 40 bereiten die zurückgeführte Luft 22 wieder auf, um erneut die heiße, trockene Luft 42 für den Trockner/Kristallisator zu erzeugen.

Auf diese Weise wird die Luft innerhalb der Vorrichtung 10 in einem geschlossenen Kreislauf geführt, ausgehend von den Luftkonditionierungsmitteln 40 durch den Trockner/Kristallisator 30, den Zentrifugaltrockner 20 und zurück zu den Luftkonditionierungsmitteln 40, in denen die Luft für ein erneutes Einblasen in den Trockner/Kristallisator 30 wiederaufbereitet wird.

Ein erfindungsgemäßes Klassiersieb 36 ist in der schematischen Darstellung der Fig. 1 nicht gezeigt.

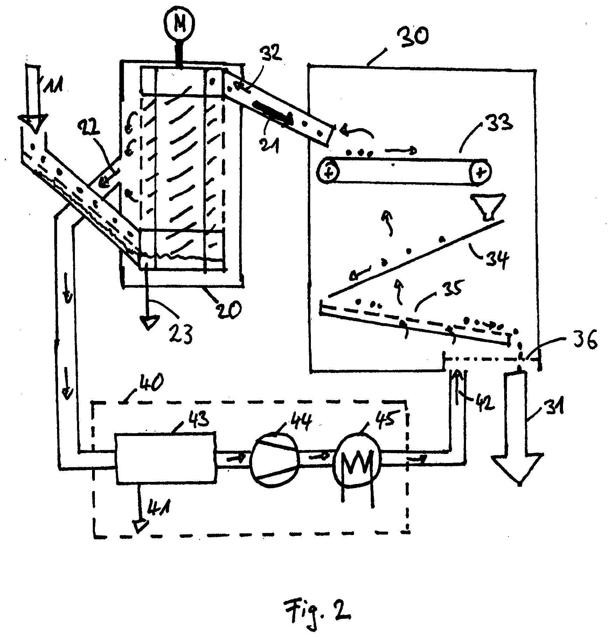

Eine spezifische erfindungsgemäße Anlage einer Ausführungsform einer Vorrichtung 10 zum Trocknen und Kristallisieren von Granulat ist in der Fig. 2 dargestellt.

In der Fig. 2 wird ein Granulat/Wassergemisch 11, das beispielsweise eine Temperatur im Bereich von 70 °C bis 95 °C aufweist, über eine Rohrleitung in den Zentrifugaltrockner 20 zugeführt. In der Rohrleitung kann ein Sieb ausgebildet sein, um Wasser aus dem Granulat/Wassergemisch 11 abzuscheiden. Im unteren Bereich des Zentrifugaltrockners 20 wird ebenfalls Wasser abgeschieden. Das abgeschiedene Wasser kann als Abwasser 23 abgelassen werden und beispielsweise zur Erneuerung des Prozesswassers in einem der Granulattrocknung vorgelagerten Prozess der Granulatherstellung wiederverwendet werden.

In dem Zentrifugaltrockner 20 wird das Granulat durch den Rotor des Zentrifugaltrockners in Bewegung versetzt und wandert durch den Zentrifugaltrockner 20 nach oben, um in einem oberen Bereich des Zentrifugaltrockners 20 als vorgetrocknetes Granulat 21 abgegeben zu werden. Es ist dabei bevorzugt, dass das vorgetrocknete Granulat 21 eine Temperatur von über 130 °C aufweist. Der Zentrifugaltrockner wird in der Gegenrichtung mit einem Luftstrom gespült, wobei der Luftstrom 32 im oberen Bereich des Zentrifugaltrockners 20 in diesen eintritt. Der Luftstrom trocknet das Granulat und nimmt dabei Wassertropfen und sich bildenden Wasserdampf auf, um diese Luft im Gegenstrom zur Bewegungsrichtung der Granulatkörner dort aus dem Zentrifugaltrockner als Abluft 22 abzuführen.

Das auf diese Weise vorgetrocknete Granulat 21 wird dem Trockner/Kristallisator 30 zugeführt. Die Zuführung ist vorzugsweise als Fallrohr ausgebildet, in dem das vorgetrocknete Granulat unter der Wirkung der Schwerkraft aus dem oberen Bereich des Zentrifugaltrockners 20 in den Trockner/Kristallisator 30 befördert wird.

Innerhalb des Trockners/Kristallisators 30 können verschiedene Einrichtungen angeordnet sein, um das Granulat zu befördern. Wie in der Fig. 2 dargestellt, kann der Trockner/Kristallisator 30 einen Bandförderer 33 aufweisen. Das vorgetrocknete Granulat 21 fällt auf ein Ende des Bandförderers 33 und wird auf diesem befördert. Das Förderband des Bandförderers ist dabei bevorzugt siebförmig ausgebildet, so dass ein Luftstrom durch das Förderband hindurchtreten und das auf dem Förderband beförderte Granulat umspülen kann zum Trocknen und Kristallisieren des Granulats. Es ist dabei bevorzugt, dass das Granulat auf dem Bandförderer 33 für eine Zeitdauer zwischen 60 und 120 Sekunden befördert wird. Am anderen Ende des Bandförderers 33 kann ein Trichter angeordnet sein, durch den das Granulat auf eine Rutsche 34 fällt, um entlang dieser zu rutschen.

In dem Trockner/Kristallisator 30 kann auch ein Fluidbett 35 vorgesehen sein. Das Fluidbett ist mit einem Lochboden versehen, durch den ein Luftstrom geleitet wird, um das Granulat unter leichter Bewegung zu verschieben. Bevorzugt ist dabei, dass das Granulat auf dem Fluidbett für eine Zeitdauer von ca. 60 Sekunden befördert wird.

Weiter ist ein Klassiersieb 36 vorgesehen, um das Granulat zu sieben. Bevorzugt ist das Sieb 36 in der Nähe des Auslasses des Trockners/Kristallisators 30 angeordnet, so dass das Sieb das bereits endgetrocknete und auf den gewünschten Endwert kristallisierte Granulat 31 siebt, bevor dieses den Trockner/Kristallisator 30 verlässt. Beim Verlassen des Trockners/Kristallisators 30 weist das getrocknete und kristallisierte Granulat vorzugsweise eine Temperatur im Bereich von 160 °C bis 180 °C, insbesondere eine Temperatur von 170 °C auf. Nachdem das Granulat derart durch den Trockner/Kristallisator 30 befördert wurde, wird das getrocknete und auf den gewünschten teilkristallinen Endwert kristallisierte Granulat 31 aus dem Trockner/Kristallisator abgegeben.

Um die Trocknung und Kristallisierung im Trockner/Kristallisator 30 zu bewirken, wird der Trockner/Kristallisator 30 mit heißer, trockener Luft 42 gespült, welche von den Luftkonditionierungsmitteln 40 erzeugt und bereitgestellt wird. Nachdem die heiße, trockene Luft 42 durch den Trockner/Kristallisator 30 geströmt ist, wird diese Abluft 32 des Trockners/Kristallisators dazu verwendet, den Zentrifugaltrockner 20 zu spülen. Der Übertritt der Abluft 32 des Trockners/Kristallisators 30 zum Zentrifugaltrockner 20 kann durch separate Kanäle erfolgen. Bevorzugt strömt die Abluft 32, wie in der Fig. 2 dargestellt, durch das Fallrohr in Gegenrichtung zum vorgetrockneten Granulat 21, so dass separate Luftführungskanäle vermieden werden können.

Wie in der Fig. 2 weiter zu erkennen, sind Luftkonditionierungsmittel 40 vorgesehen, die einen Tropfenabscheider 43 zum Entfeuchten der von dem Zentrifugaltrockner 20 zurückgeführten Abluft 22, ein Gebläse 44 zum Erzeugen eines Luftstroms und Heizmittel 45 zum Erhitzen der Luft umfassen können, um die dem Trockner/Kristallisator 30 einzublasende heiße, trockene Luft 42 zu erzeugen. Das in dem Tropfenabscheider 43 abgeschiedene Wasser kann als Abwasser 41 abgegeben werden, um etwa als Prozesswasser in einem vorgelagerten Prozess wiederverwendet zu werden.

Bevorzugt werden die Luftkonditionierungsmittel durch eine Steuereinheit (nicht dargestellt) gesteuert, um eine Temperatur, eine Luftfeuchte und/oder eine Luftmenge der dem Trockner/Kristallisator 30 zuzuführenden Luft 42 zu steuern. Besonders bevorzugt erfolgt die Steuerung derart, dass die dem Zentrifugaltrockner 20 zugeführte Luft 32 auf einen Taupunkt gesteuert oder geregelt wird, der von einem Bediener der Vorrichtung 10 vorgegeben werden kann.

## Patentansprüche

1. Verfahren zum kontinuierlichen Trocknen und Kristallisieren von mit Wasser umspültem Granulat, aufweisend die Schritte
Zuführen von mit Wasser umspültem Granulat (11) in einen Vortrockner (20); Vortrocknen des Granulats im Vortrockner (20);
Befördern von vorgetrocknetem Granulat (21) in einen Trockner/Kristallisator (30); und Abgeben von kristallisiertem Granulat (31) aus dem Trockner/Kristallisator (30);
wobei Luftkonditionierungsmittel (40) temperierte und im Feuchtegrad konditionierte Luft (42) erzeugen, die dem Trockner/Kristallisator (30) zugeführt wird,
wobei die Abluft (32) des Trockners/Kristallisators (30) dem Vortrockner (20) zugeführt wird,
wobei die Abluft (22) des Vortrockners (20) zu den Luftkonditionierungsmitteln (40) zurückgeführt wird, so dass ein geschlossener Luftkreislauf durch den Trockner/Kristallisator (30), Vortrockner (20) und die Luftkonditionierungsmittel (40) gebildet wird, **dadurch gekennzeichnet, dass** im Trockner/Kristallisator (30) das Granulat mit einem Klassiersieb (36) gesiebt wird.

2. Verfahren nach Anspruch 1, **dadurch gekennzeichnet, dass** der Vortrockner (20) ein Zentrifugaltrockner ist.

3. Verfahren nach einem der Ansprüche 1 und 2, **dadurch gekennzeichnet, dass** die Luftkonditionierungsmittel (40) die zurückgeführte Abluft (22) des Vortrockners (20) entfeuchten und erhitzen, um die trockene, heiße Luft (42) zu erzeugen.

4. Verfahren nach einem der Ansprüche 1 bis 3, **dadurch gekennzeichnet, dass** in dem Trockner/Kristallisator (30) das zu kristallisierende Granulat transportiert wird auf zumindest einem von:
einem Bandförderer (33);
einer Rutsche (34);
einem Fluidbett (35);
eine Rüttelrinne; und/oder
einen Behälter mit Rührwerk.

5. Verfahren nach einem der Ansprüche 1 bis 4, **dadurch gekennzeichnet, dass** die dem Trockner/Kristallisator (30) zugeführte Luft (42) eine Temperatur im Bereich von 140°C bis 200°C, bevorzugt im Bereich 160°C bis 180°C, besonders bevorzugt von etwa 170°C aufweist.

6. Verfahren nach einem der Ansprüche 1 bis 5, **dadurch gekennzeichnet, dass** die Luftkonditionierungsmittel (40) so gesteuert werden, dass die dem Vortrockner (20) zugeführte Luft (32) einen vorgegebenen Taupunkt annimmt.

7. Verfahren nach einem der Ansprüche 1 bis 6, **dadurch gekennzeichnet, dass** das Granulat in dem Vortrockner (20) auf eine Temperatur von 130°C oder höher vorgetrocknet wird.

8. Verfahren nach einem der Ansprüche 1 bis 7, **dadurch gekennzeichnet, dass** das Granulat im Trockner/Kristallisator (30) auf eine Temperatur im Bereich von 160°C bis 180°C, bevorzugt auf eine Temperatur von 170°C erwärmt wird.

9. Vorrichtung (10) zum kontinuierlichen Trocknen und Kristallisieren von mit Wasser umspültem Granulat, aufweisend
einen Vortrockner (20), welcher einen Einlass zur Zuführung von mit Wasser umspültem Granulat (11) und einen Auslass zur Abgabe von vorgetrocknetem Granulat (21) aufweist,
einen Trockner/Kristallisator (30), der einen Einlass zur Zuführung des vorgetrockneten Granulats (21) und einen Auslass zur Abgabe von getrocknetem und kristallisiertem Granulat (31) aufweist, und
Luftkonditionierungsmittel (40), um temperierte und im Feuchtegrad konditionierte Luft (42) zu erzeugen, welche dem Trockner/Kristallisator (30) zugeführt werden kann, wobei die Vorrichtung (10) eingerichtet ist, eine Abluft (31) des Trockners/Kristallisators (30) dem Vortrockner (20) zuzuführen, und weiter eingerichtet ist, eine Abluft (21) des Vortrockners (20) zurückzuführen zu den Luftkonditionierungsmitteln (40) um einen geschlossenen Luftkreislauf zu bilden,
**dadurch gekennzeichnet, dass** im Trockner/Kristallisator (30) ein Klassiersieb (36) angeordnet ist, mittels welchem das Granulat gesiebt wird.

10. Vorrichtung (10) nach Anspruch 9, **dadurch gekennzeichnet, dass** der Vortrockner (20) ein Zentrifugaltrockner ist.

11. Vorrichtung (10) nach einem der Ansprüche 9 bis 10, **dadurch gekennzeichnet, dass** die Luftkonditionierungsmittel (40) aufweisen:
einen Tropfenabscheider (43) und/oder ein Molekularsieb zum Entfeuchten der von dem Vortrockner (20) zurückgeführten Abluft (22);
Heizmittel (45) zum Erhitzen der Luft; und
Gebläsemittel (44) zum Erzeugen eines Luftstroms.

12. Vorrichtung (10) nach einem der Ansprüche 9 bis 11, **dadurch gekennzeichnet, dass** der Trockner/Kristallisator (30) zumindest eines umfasst von:
einem Bandförderer (33);
einer Rutsche (34);
einem Fluidbett (35);
einem Sieb (36);
eine Rüttelrinne; und/oder
einen Behälter mit Rührwerk.

13. Vorrichtung (10) nach einem der Ansprüche 9 bis 12, **dadurch gekennzeichnet, dass** die Vorrichtung (10) eine Steuereinheit zum Steuern der Luftkonditionierungsmittel (40) aufweist, wobei die Steuereinheit eingerichtet ist, eine Temperatur, eine Luftfeuchte und/oder eine Luftmenge der dem Trockner/Kristallisator (30) zuzuführenden Luft (42) zu steuern.

14. Vorrichtung (10) nach Anspruch 13, **dadurch gekennzeichnet, dass** die Steuereinheit eingerichtet ist, die Temperatur, Luftfeuchte und/oder Luftmenge der dem Trockner/Kristallisator (30) zuzuführenden Luft (42) so zu steuern, dass die dem Vortrockner (20) zugeführte Luft (32) auf einen vorgebbaren Taupunkt gesteuert oder geregelt wird.

## Claims

1. Method for continuously drying and crystallizing water-flushed granulate, having the steps
feeding water-flushed granulate (11) into a pre-dryer (20); pre-drying the granulate in the pre-dryer (20);
conveying pre-dried granulate (21) into a dryer/crystallizer (30); and
discharging crystallized granulate (31) from the dryer/crystallizer (30);
wherein air conditioning means (40) produce temperature-controlled and humidity-conditioned air (42) that is delivered to the dryer/crystallizer (30),
wherein the exhaust air (32) of the dryer/crystallizer (30) is delivered to the pre-dryer (20), and
wherein the exhaust air (22) of the pre-dryer (20) is returned to the air conditioning means (40) so that a closed air circuit is formed by the dryer/crystallizer (30), pre-dryer (20), and air conditioning means (40),
**characterized in that**
the granulate is screened in the dryer/crystallizer (30) with a classifying screen (36).

2. Method according to claim 1, **characterized in that** the pre-dryer (20) is a centrifugal dryer.

3. Method according to one of claims 1 and 2, **characterized in that** the air conditioning means (40) dehumidify and heat the returned exhaust air (22) of the pre-dryer (20) in order to produce the dry, hot air (42).

4. Method according to one of claims 1 to 3, **characterized in that** the granulate to be crystallized is transported in the dryer/crystallizer (30) on at least one of the following:
a belt conveyor (33);
a chute (34);
a fluid bed (35);
a vibrating trough; and/or
a vessel with agitator.

5. Method according to one of claims 1 to 4, **characterized in that** the air (42) delivered to the dryer/crystallizer (30) has a temperature in the range from 140 °C to 200 °C, preferably in the range from 160 °C to 180 °C, especially preferably a temperature of approximately 170 °C.

6. Method according to one of claims 1 to 5, **characterized in that** the air conditioning means (40) are controlled such that the air (32) delivered to the pre-dryer (20) assumes a predetermined dew point.

7. Method according to one of claims 1 to 6, **characterized in that** the granulate in the pre-dryer (20) is pre-dried to a temperature of 130 °C or above.

8. Method according to one of claims 1 to 7, **characterized in that** the granulate in the dryer/crystallizer (30) is heated to a temperature in the range from 160 °C to 180 °C, preferably to a temperature of 170 °C.

9. Device (10) for continuously drying and crystallizing water-flushed granulate, having
a pre-dryer (20) that has an inlet for feeding water-flushed granulate (11) and an outlet for discharging pre-dried granulate (21),
a dryer/crystallizer (30) that has an inlet for feeding the pre-dried granulate (21) and an outlet for discharging dried and crystallized granulate (31), and
air conditioning means (40) for producing temperature-controlled and humidity-conditioned air (42) that can be delivered to the dryer/crystallizer (30),
wherein
the device (10) is configured to deliver an exhaust air (31) of the dryer/crystallizer (30) to the pre-dryer (20), and is additionally configured to return an exhaust air (21) of the pre-dryer (20) to the air conditioning means (40), in order to form a closed air circuit, **characterized in that**
a classifying screen (36), by means of which the granulate is screened, is located in the dryer/crystallizer (30).

10. Device (10) according to claim 9, **characterized in that** the pre-dryer (20) is a centrifugal dryer.

11. Device (10) according to one of claims 9 to 10, **characterized in that** the air conditioning means (40) have:
a mist eliminator (43) and/or a molecular sieve for dehumidifying the exhaust air (22) returned from the pre-dryer (20);
heating means (45) for heating the air; and
blower means (44) for producing an air flow.

12. Device (10) according to one of claims 9 to 11, **characterized in that** the dryer/crystallizer (30) comprises at least one of the following:
a belt conveyor (33);
a chute (34);
a fluid bed (35);
a screen (36);
a vibrating trough; and/or
a vessel with agitator.

13. Device (10) according to one of claims 9 to 12, **characterized in that** the device (10) has a control unit for controlling the air conditioning means (40), wherein the control unit is configured to control a temperature, a humidity, and/or a volume of the air (42) to be delivered to the dryer/crystallizer (30).

14. Device (10) according to claim 13, **characterized in that** the control unit is configured to control the temperature, humidity, and/or volume of the air (42) to be delivered to the dryer/crystallizer (30) in such a manner that the air (32) delivered to the pre-dryer (20) is controlled or regulated to a predefinable dew point.

## Revendications

1. Procédé pour le séchage et la cristallisation en continu de granulés brassés dans l'eau, comportant les étapes suivantes
alimentation d'un préséchoir (20) en granulés (11) brassés dans l'eau ; préséchage des granulés dans un préséchoir (20) ;
transport des granulés préséchés (21) dans un séchoir/cristallisateur (30) ; et évacuation des granulés cristallisés (31) du séchoir/cristallisateur (30) ;
des moyens de conditionnement de l'air (40) produisant de l'air tempéré et conditionné pour le taux d'humidité (42) alimentant le séchoir/cristallisateur (30),
l'air évacué (32) du séchoir/cristallisateur (30) étant ramené au préséchoir (20),
l'air évacué (22) du préséchoir (20) étant ramené aux moyens de conditionnement de l'air (40) de sorte qu'un cycle d'air fermé est formé par le séchoir/cristallisateur (30), le préséchoir (20) et les moyens de conditionnement de l'air (40),
**caractérisé en ce que** dans le séchoir/cristallisateur (30) les granulés sont triés au moyen d'un crible-classeur (36).

2. Procédé selon la revendication 1, **caractérisé en ce que** le préséchoir (20) est un séchoir centrifuge.

3. Procédé selon une des revendications 1 et 2, **caractérisé en ce que** les moyens de conditionnement de l'air (40) déshumidifient et chauffent l'air évacué (22) ramené du préséchoir (20) pour produire de l'air chaud et sec (42).

4. Procédé selon une des revendications 1 à 3, **caractérisé en ce que** les granulés devant être cristallisés dans le séchoir/cristallisateur (30) sont transportés sur au moins un des éléments suivants :
un tapis transporteur (33)
un toboggan (34)
un lit fluidisé (35)
un conduit vibrant ; et/ou
un conteneur avec agitateur.

5. Procédé selon une des revendications 1 à 4 **caractérisé en ce que** l'air (42) alimentant le séchoir/cristallisateur (30) présente une température entre 140°C et 200°C, de préférence entre 160°C et 180°C, et de manière particulièrement préférée de 170°C .

6. Procédé selon une des revendications 1 à 5, **caractérisé en ce que** les moyens de conditionnement de l'air (40) sont pilotés de sorte que l'air (32) alimentant le préséchoir (20) prend un point de rosée prédéterminé.

7. Procédé selon une des revendications 1 à 6, **caractérisé en ce que** les granulés peuvent être séchés dans le préséchoir (20) à une température de 130°C ou plus élevée.

8. Procédé selon une des revendications 1 à 7, **caractérisé en ce que** les granulés peuvent être portés dans le séchoir/cristallisateur (30) à une température entre 160°C et 180C°, de préférence à une température de 170°C.

9. Dispositif (10) pour le séchage et la cristallisation en continu de granulés brassés dans l'eau comportant
un préséchoir (20) comportant une entrée pour introduire les granulés (11) brassés dans l'eau, une sortie pour évacuer les granulés préséchés (21),
un séchoir/cristallisateur (30) comportant une entée pour introduire les granulés préséchés (21) et une sortie pour évacuer les granulés séchés et cristallisés (31), et
des moyens de conditionnement de l'air (40) pour générer de l'air tempéré et conditionné en taux d'humidité (42) qui peut être ramené au séchoir /cristallisateur (30),
le dispositif (10) étant prévu de sorte que l'air évacué (31) du séchoir/cristallisateur (30) soit ramené au préséchoir (20) et aussi prévu pour que de l'air évacué (21) du préséchoir (20) soit ramené aux moyens de conditionnement d'air (40) pour former un cycle d'air fermé,
**caractérisé en ce qu'**un crible-classeur (36) est agencé dans le séchoir/cristallisateur (30) au moyen duquel les granulés sont triés.

10. Dispositif (10) selon la revendication 9, **caractérisé en ce que** le préséchoir (20) est un séchoir centrifuge.

11. Dispositif (10) selon une des revendications 9 à 10, **caractérisé en ce que** les moyens de conditionnement de l'air (40) comportent :
un séparateur de gouttes (43) et/ou un tamis moléculaire pour déshumidifier l'air évacué (22) du préséchoir (20) ;
des moyens de chauffage(45) pour chauffer l'air ; et
des souffleries (44) pour générer un flux d'air.

12. Dispositif (10) selon une des revendications 9 à 11, **caractérisé en ce que** le séchoir/cristallisateur (30) comporte au moins un des éléments suivants :
un tapis transporteur (33)
un toboggan (34)
un lit fluidisé (35)
un tamis (36)
un conduit vibrant ; et/ou
un conteneur avec agitateur.

13. Dispositif (10) selon une des revendications 9 à 12, **caractérisé en ce que** le dispositif (10) comporte une commande pour piloter les moyens de conditionnement de l'air (40), la commande étant prévue pour piloter une température, un taux d' humidité de l'air et/ou un débit d'air de l'air ramené (42) au séchoir/cristallisateur (30).

14. Dispositif (10) selon la revendication 13 **caractérisé en ce que** la commande est prévue pour pouvoir piloter la température, le taux d'humidité de l'air et/ou le débit d'air de l'air ramené (42) au séchoir/cristallisateur (30) de sorte que l'air (32) alimentant le préséchoir (20) est piloté ou régulé à un point de rosée prédéfinissable.
